# EUROPEAN PATENT APPLICATION

(11) **EP 4 585 472 A1**
(43) Date of publication of application: **16.07.2025**
(21) Application number: 22958016.2
(22) Date of filing: 09.09.2022
(51) Int. Cl.: B60R 21/13, B62D 23/00, B62D 31/02

(54) **ROLL CAGE KIT FOR MOTOR VEHICLES WITH A CHASSIS AND VEHICLE COMPRISING THE KIT**

(71) Applicant: Brigadier Motors, S.L., 09001 Burgos (ES)
(72) Inventor: PORRAS BRACERAS, Jairo, 09007 BURGOS (Burgos) (ES)
(74) Representative: Capitán García, Maria Nuria
(86) International application number: PCT/ES2022/070566
(87) International publication number: WO 2024/052581

(57) **Abstract**

**SUMMARY**

Roll cage kit for motor vehicles with either a self-supporting or ladder-type chassis comprising: four closed arches arranged parallel to each other, lower longitudinal crossbars, upper longitudinal crossbars, transversal crossbars and intermediate sections, such that some intermediate sections can support a row of seats, forming a sturdy and easily adaptable structure. The motor vehicle with a chassis, whether self-supporting or ladder-type, is equipped with the kit, which can be configured in different ways to provide space for passengers and for transporting objects.

## Description

### TECHNICAL SCOPE OF THE INVENTION

This invention belongs to the category of devices or equipment for vehicles designed to protect the occupants or prevent them from being injured in the event of an accident or other traffic hazards. Specifically, it involves a device in the form of a kit or a separate structure that can be installed in an existing vehicle.

### BACKGROUND TO THE INVENTION

Two types of chassis are commonly used in motor vehicles: the self-supporting or monocoque chassis and the ladder-type. In the former, the body forms a closed structure that includes the chassis, made up of a series of different shaped metal sections. There is no chassis as such, but rather a hull or shell that forms both the structure of the vehicle and its body with the exception of the final panels. However, in the case of the ladder-type, there is a chassis on which the bodywork, engine and other elements are mounted. Regardless of whether it is self-supporting or ladder-type, the chassis is made up of a pair of beams running lengthways along the vehicle and joined by one or more crosspieces to form the main structural element of the vehicle.

Motor vehicles with a ladder-type chassis are usually used for industrial, off-road and competition purposes, as well as for any other activity requiring a very rigid chassis that can be separated from the bodywork. Passenger vehicles, on the other hand, have a self-supporting chassis.

Thus, motor vehicles with a ladder-type chassis allow for different bodywork to be included according to a specific need, using a common initial configuration. For example, an enclosed cabin with seats for transporting people that forms the entire body, an enclosed cabin for people and a refrigerated box for transporting perishable products, an enclosed cabin for people and an open box for transporting objects of variable size, etc.

Given the aforementioned configuration, motor vehicles with a ladder-type chassis can also be repurposed with a different configuration after being built in a certain way, simply by removing the bodywork and replacing it with a new one, usually leaving the cabin for people and replacing the box.

In what is known so far, the roll cages fitted to this type of vehicle, which allow people and objects to be transported in the cargo area, usually include two arches for each row of seats, creating an aisle between the rows. Thus, for two rows of seats, two aisles are created, which implies a relatively large longitudinal dimension, while the safety requirements for the occupants make it necessary to place the rows of seats in the direction of travel and with a safety space in case of impact, as required by current regulations.

There is a need for a roll cage kit for existing motor vehicles with a chassis, both self-supporting and ladder-type, that requires less space than existing chassis kits and that also allows for the addition of other features such as spaces for different objects once fitted in the vehicle.

### DESCRIPTION OF THE INVENTION

This invention is defined and characterised in the independent claims, while the dependent claims describe other features of the invention.

The purpose of the invention is a roll cage kit for motor vehicles with both self-supporting and ladder-type chassis and a vehicle that includes it. The technical problem to be solved is to configure the elements that make up the kit, as well as their arrangement in the vehicle to create various useful spaces for placing different objects.

In view of the above, this invention refers to a roll cage kit for motor vehicles with a chassis, both self-supporting and ladder-type, which comprises: four arches, first, second, third and fourth, arranged consecutively;
- the first arch comprises: a first lateral section, followed by a first upper section, followed by a second lateral section; the second arch comprises: a third lateral section, followed by a second upper section, followed by a fourth lateral section; the third arch comprises: a fifth lateral section, followed by a third upper section, followed by a sixth lateral section; the fourth arch comprises: a seventh lateral section, followed by a fourth upper section, followed by an eighth lateral section;
- a first upper longitudinal crossbar connects the first upper section and the second upper section; a second upper longitudinal crossbar connects the second upper section and the third upper section; a third upper longitudinal crossbar connects the third upper section and the fourth upper section;
- a first transversal crossbar connects the first side section and the third side section; a second transversal crossbar connects the first side section and the third side section; a third transversal crossbar connects the second side section and the fourth side section; a fourth transversal crossbar connects the second side section and the fourth side section;
- a fifth transversal crossbar connects the fifth side section and the seventh side section; a sixth transversal crossbar connects the fifth side section and the seventh side section; a seventh transversal crossbar connects the sixth side section and the eighth side section; an eighth transversal crossbar connects the sixth side section and the eighth side section;
- a first intermediate section connects the first lateral section and the second lateral section; a second intermediate section connects the third lateral section and the fourth lateral section;
- a third intermediate section connects the fifth lateral section and the sixth lateral section; a fourth intermediate section connects the seventh lateral section and the eighth lateral section.

These are the minimum elements required to create a sufficiently-strong roll cage kit. This arrangement has the advantage of providing seats for passengers and a corridor between them, as explained later in this document. Likewise, the layout of the elements allows for the configuration of certain spaces or gaps for different functions, as explained below.

The spatial terms 'lateral' , 'upper' , 'lower', 'longitudinal', 'transversal' and similar terms are included for a better understanding and to differentiate the words they accompany. They relate to when the kit is in its final position of use and also to the arrangement of some elements in relation to others, without being limiting features of the elements they accompany.

One advantage of this kit is that it uses simple structural elements to create a very strong structure that can be easily adapted to any space requirement, just placing the elements that make up the kit where required, creating two spaces for seats and a space for a corridor between them, with less distance required in the longitudinal direction of the vehicle than in the conventional layout.

Likewise, the invention concerns a motor vehicle with either a self-supporting or ladder-type chassis, that comprises a chassis, with a first crossbar running parallel to a second crossbar, both of which run longitudinally along the vehicle and are joined by a first transversal bar, characterised by the fact that it comprises a roll cage kit as described, fixed to the first and second crossbars.

Ladder-type chassis usually is constituted of two crossbars or beams, although there may be more if the vehicle requires it, due to the vehicle being large or having very high resistance requirements. Similarly, there is at least one transversal beam between the crossbars, although there are usually two or three, and more if required.

One advantage of this vehicle is that it can be easily configured by simply attaching the roll cage kit to the chassis, providing a sufficiently strong structure, capable of accommodating two rows of seats and an aisle between them, to create a total longitudinal dimension that may be less than when using a conventional kit.

### BRIEF DESCRIPTION OF THE FIGURES

This description is supplemented with a set of figures illustrating one particular example, without limiting the invention in any way.
Figure 1 shows a top view of a completed roll cage kit.
Figure 2 shows a lower perspective view of a vehicle with another embodiment of a roll cage kit, which has an additional arch compared to the one in figure 1.
Figure 3 shows a top view of the vehicle in figure 2, including various objects inside the vehicle.
Figure 4 shows a top view of another embodiment of the roll cage kit, which has two additional arches compared to the one in figure 1, or one additional arch compared to the one in figure 2.

### DETAILED DESCRIPTION OF THE INVENTION

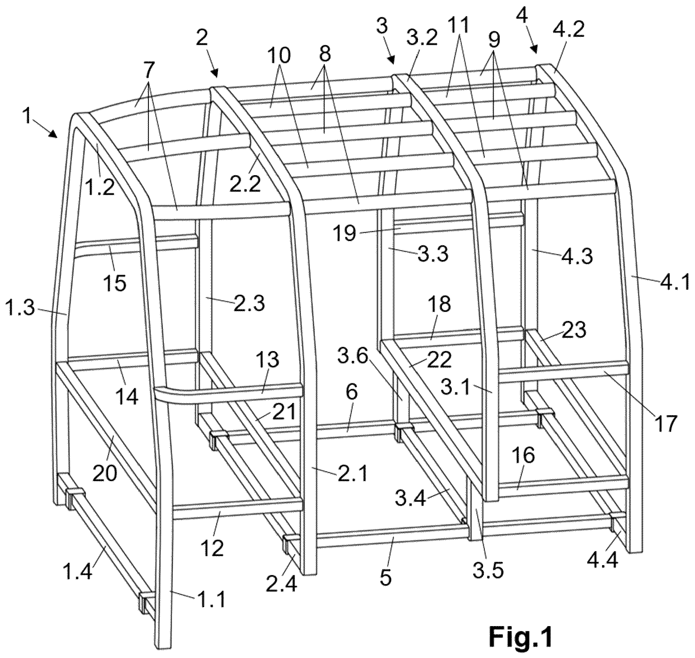

Figure 1 shows a roll cage kit for motor vehicles with a ladder-type chassis in the embodiment shown, although it could also be self-supporting, comprising: four closed arches, first (1), second (2), third (3) and fourth (4), arranged consecutively, specifically parallel to each other in the embodiment shown;
- the first arch (1) comprises: a first lateral section (1.1), followed by a first upper section (1.2), followed by a second lateral section (1.3); the second arch (2) comprises: a third lateral section (2.1), followed by a second upper section (2.2), followed by a fourth lateral section (2.3); the third arch (3) comprises: a fifth lateral section (3.1), followed by a third upper section (3.2), followed by a sixth lateral section (3.3); the fourth arch (4) comprises: a seventh lateral section (4.1), followed by a fourth upper section (4.2), followed by an eighth lateral section (4.3).

The embodiment of figure 1 also shows that a first upper longitudinal crossbar (7) connects the first upper section (1.2) and the second upper section (2.2); a second upper longitudinal crossbar (8) connects the second upper section (2.2) and the third upper section (3.2); a third upper longitudinal crossbar (9) connects the third upper section (3.2) and the fourth upper section (4.2).

When the first upper longitudinal crossbar (7) connects the first upper section (1.2) and the second upper section (2.2), it can do so at any point along them. It is commonly located in one of the upper corners of the first arch (1), that is, at the junction between the first lateral section (1.1) and the first upper section (1.2) or at the junction between the second lateral section (1.3) and the first upper section (1.2), although it can also be located up to a distance of 10 cm from these junctions or corners. The same can be said for the second upper longitudinal crossbar (8) and the third upper longitudinal crossbar (9). The embodiment shown includes first three upper longitudinal crossbars (7), one in each upper corner of the first arch (1) and one in the middle, connecting to form continuous crossbars along the kit with their corresponding second upper longitudinal crossbars (8) and these with their corresponding third upper longitudinal crossbars (9).

Similarly, the embodiment of figure 1 shows that a first transversal crossbar (12) connects the first lateral section (1.1) and the third lateral section (2.1), a second transversal crossbar (13), parallel to the first transversal crossbar (12) in the embodiment shown, connects the first lateral section (1.1) and the third lateral section (2.1); a third transversal crossbar (14) connects the second lateral section (1.3) and the fourth lateral section (2.3); a fourth transversal crossbar (15), parallel to the third transversal crossbar (14) in the embodiment shown, connects the second lateral section (1.3) and the fourth lateral section (2.3);
- a fifth transversal crossbar (16) connects the fifth lateral section (3.1) and the seventh lateral section (4.1); a sixth transversal crossbar (17), parallel to the fifth transversal crossbar (16) in the embodiment shown, connects the fifth lateral section (3.1) and the seventh lateral section (4.1); a seventh transversal crossbar (18) connects the sixth lateral section (3.3) and the eighth lateral section (4.3); an eighth transversal crossbar (19), parallel to the seventh transversal crossbar (18) in the embodiment shown, connects the sixth lateral section (3.3) and the eighth lateral section (4.3). These elements reinforce the kit and create spaces that can be used in a practical way, such as allowing for the provision of an opening or window for the occupants, as when the kit is arranged in a vehicle, as explained below.

Additionally, the embodiment of figure 1 shows that a first intermediate section (20) connects the first lateral section (1.1) and the second lateral section (1.3); a second intermediate section (21) connects the third lateral section (2.1)
and the fourth lateral section (2.3); a third intermediate section (22) connects the fifth lateral section (3.1) and the sixth lateral section (3.3); a fourth intermediate section (23) connects the seventh lateral section (4.1) and the eighth lateral section (4.3).

In the illustrated example, the four archways (1,2,3,4) are closed, each including a first lower section (1.4), a second lower section (2.4), a third lower section (3.4) and a fourth lower section (4.4). This has the advantage of forming closed structures that tend to be sturdier. Likewise, the illustration shows the option in which the third arch (3) has a first connecting section (3.5) and a second connecting section (3.6), both extending from the third intermediate section (22) to the third lower section (3.4), so as to clear the rear wheels of the vehicle. These options reflect the fact that the lower part of the four archways (1,2,3,4) is of secondary importance and is configured according to the needs of each specific application.

Similarly, the embodiment in figure 1 shows the possibility of a first lower longitudinal crossbar (5) at the bottom of the kit, connecting the second lower section (2.4), the third lower section (3.4) and the fourth lower section (4.4); a second lower longitudinal crossbar (6), parallel to the first lower longitudinal crossbar (5) in the embodiment shown, connects the second lower section (2.4), the third lower section (3.4) and the fourth lower section (4.4). These are not strictly necessary but may be useful depending on the specific application.

Another useful option shown in the figures, providing superior structural reinforcement, is a fourth upper longitudinal beam (10), running parallel to the second upper longitudinal beam (8), connecting the second upper section (2.2) and the third upper section (3.2). Similarly, a fifth upper longitudinal beam (11) can be added, shown running parallel to the third upper longitudinal beam (9), connecting the third upper section (3.2) and the fourth upper section (4.2). In the embodiment shown there are two fourth upper longitudinal crossbars (10) and two fifth upper longitudinal crossbars (11).

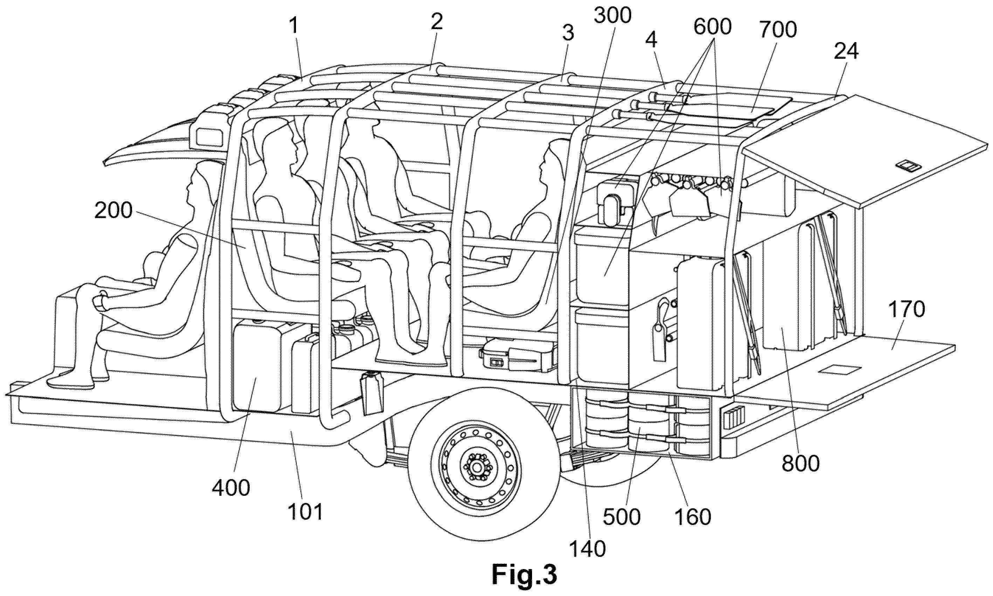

Another option shown in figure 1 is that when there is a fourth upper longitudinal crossbar (10) and a fifth upper longitudinal crossbar (11), they are both aligned. Furthermore, the fourth upper longitudinal crossbar (10) and the fifth upper longitudinal crossbar (11) can be hollow and accessible from the fourth upper section (4.2), so that, as can be seen in figure 3, they can be used to house elongated elements, such as the handles of shovels (700) or similar in a vehicle designed to transport a firefighting brigade.

Similarly, another useful option is mentioned below which involves structural reinforcement of the lower part. Although already mentioned above in relation to closed arches, the minimum elements for this reinforcement are listed here: the second arch (2) also comprises a second lower section (2.4) that connects the third lateral section (2.1) and the fourth lateral section (2.3); the fourth arch (4) also comprises a fourth lower section (4.4) that connects the seventh lateral section (4.1) and the eighth lateral section (4.3); a first lower longitudinal crossbar (5) connects the second lower section (2.4) and the fourth lower section (4.4); a second lower longitudinal crossbar (6) connects the second lower section (2.4) and the fourth lower section (4.4), figure 1. In addition to this, the first lower longitudinal crossbar (5) and/or the second lower longitudinal crossbar (6) is hollow and accessible from the fourth upper section (4.2), so it can also be used to house elongated elements, not shown in the figures. Indeed, the first lower longitudinal crossbar (5) and/or the second lower longitudinal crossbar (6) can extend to a fifth arch (24), shown below; it is not normal for it to extend to a sixth arch (25) if it were the last arch towards the rear of the vehicle, as the objects it could hold would extend beyond the rear, which would be contrary to normal traffic regulations.

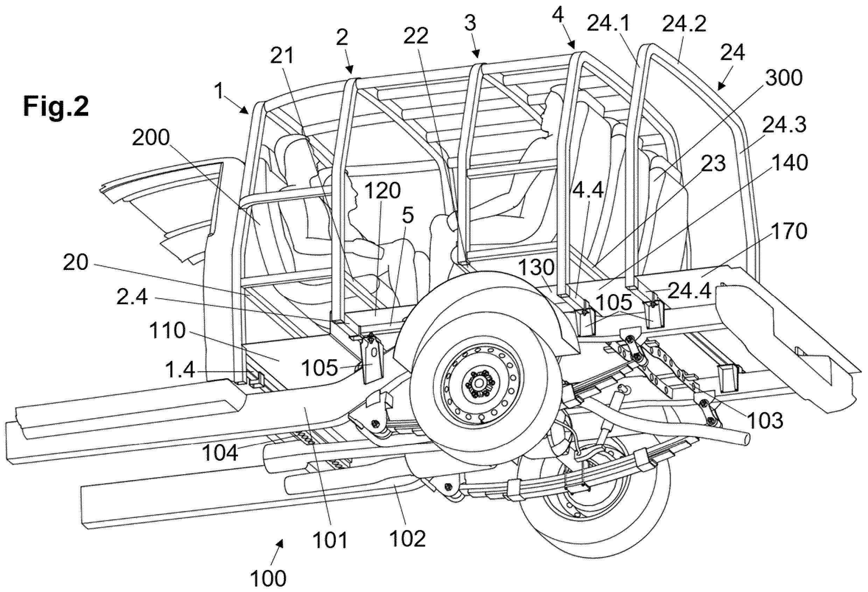

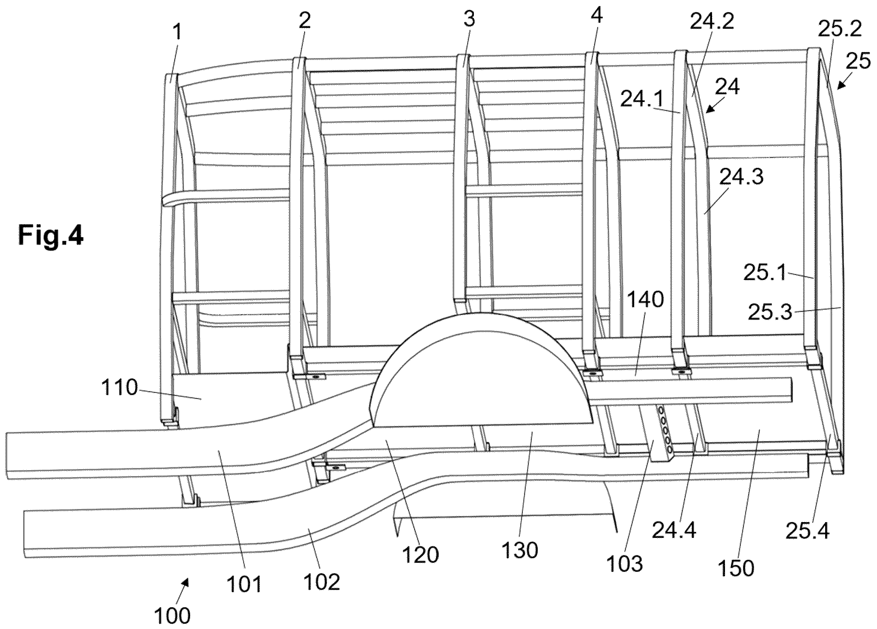

Optionally, figures 2 and 3, the kit also comprises a fifth arch (24) or even a sixth arch (25), figure 4. These added arches, the fifth (24) and sixth (25), can either be connected to the other arches by means of crossbars or similar to form a structural part of the kit, or be separated in terms of structural configuration to configure storage and transport spaces as required by the application. The fifth arch (24) and sixth arch (25) are mentioned later in the description of the vehicle; the fifth arch (24) comprises a ninth lateral section (24.1), followed by a fifth upper section (24.2), followed by a tenth lateral section (24.3), with the option shown for it to be closed, thus including a fifth lower section (24.4), figure 2. This is appropriate when the total length of the vehicle, after fitting the minimum required roll cage kit as described above, leaves space at the rear for storage or other functions. In the arrangement of figures 2 and 3, the fifth arch (24) is separated from the previous ones, thus creating an open space between them, but the third upper longitudinal crossbar (9) may extend to the fifth arch (24), as shown in figure 3, thus creating a sturdier structure.

Some measurements that are particularly beneficial are that the height of the arches, first (1), second (2), third (3) and fourth (4), is between 1200 mm and 1600 mm, the width of the same is between 1600 mm and 2200 mm, the distance between the first arch (1) and the second arch (2) is between 200 mm and 600 mm, between the second arch (2) and the third arch (3) is between 450 mm and 800 mm, between the third arch (3) and the fourth arch (4) is between 200 mm and 600 mm.

Figures 2 to 4 show a partial view of a motor vehicle with a ladder-type chassis, comprising a chassis (100), with a first crossbar (101) running parallel to a second crossbar (102), both running the length of the vehicle and joined by a first transversal beam (103), figure 2, although it could include more transversal beams, such as the second transversal beam (104) shown, with a roll cage kit, as mentioned, fixed to the first crossbar (101) and the second crossbar (102).

The kit can be fixed directly to the chassis or using some other element, such as the brackets (105) shown in figure 2, as well as fitting 'silent-block' type shock absorbers.

As can be seen in figures 2 and 3, a first row of seats (200) is arranged facing in the opposite direction to the vehicle's direction of travel and is fixed or supported on the first crossbar (101) and the second crossbar (102) and/or the first intermediate section (20) and the second intermediate section (21), and to this can be added a second row of seats (300) facing in the vehicle's direction of travel, also fixed or supported on the first crossbar (101) and the second crossbar (102) and/or the third intermediate section (22) and the fourth intermediate section (23).

As can be seen in figures 2 and 3, a first panel (110) is placed between the first arch (1) and the second arch (2) and is fixed or supported on the first crossbar (101) and the second crossbar (102), so that it creates a cavity for storing objects. In figure 3, we can see that a fuel tank (400) has been installed, as it is possible to close the cavity created and make it watertight, which is advantageous for storing hazardous substances.

Additional panels can be added, figure 2, such as a second panel (120) that extends between the second arch (2) and the third arch (3) and is fixed or supported to the first crossbar (101) and the second crossbar (102) and a third panel (130) that extends between the third arch (3) and the fourth arch (4) and that is fixed or supported on the first crossbar (101) and the second crossbar (102), to form the floor of the vehicle's passenger compartment.

Another option is to include a fifth arch (24) in the kit, figures 2 to 4, comprising a ninth lateral section (24.1), followed by a fifth upper section (24.2) and a tenth lateral section (24.3), with the option of closing it, as shown here, thus including a fifth lower section (24.4), figures 2 and 4; this allows a fourth panel (140) to be installed, extending between the fourth arch (4) and the fifth arch (24) and fixed to or supported by the first crossbar (101) and the second crossbar (102), as well as a vertically hinged door (170), figures 2 and 3, i.e. with the hinge in a horizontal position, fixed in a rotary manner to the ninth lateral section (24.1) and to the tenth lateral section (24.3), or to the fifth lower section (24.4). The vertically folding door (170) is very practical, as it can be used as a horizontal work surface, with the option of fixing a screw-in desk top, and as a step-up platform.

As can be seen in figure 3, the space created between the fourth arch (4) and the fifth arch (24) is a storage space, suitable for various objects, such as tools or tanks (600), or a sprayer (800) containing agricultural or fire-retardant substances. In the lower part, as a safety measure, another panel, the sixth panel (160), can be added to the fourth panel (140), facing outwards from the vehicle, to hold dangerous substances, such as explosives (500).

Another option shown in figure 4 is that the chassis kit, in addition to comprise a fifth arch (24), comprises a sixth arch (25) that comprises an eleventh lateral section (25.1), followed by a sixth upper section (25.2) and a twelfth lateral section (25.3), which in the figure is followed by an optional sixth lower section (25.4; this allows for the placement of a fifth plate (150), figure 4, which extends between the fifth arch (24) and the sixth arch (25) and is fixed or supported to the first crossbar (101) and the second crossbar (102), and a vertically-hinged door, which is not shown in the figures; this can be attached in a rotating manner to the eleventh side section (25.1) and the twelfth side section (25.3), or to a sixth lower section (25.4), with the aforementioned highly practical uses, as it can be used as a horizontal work surface, with a screw-in desk top, and as a step-up platform.

## Claims

1. Roll cage kit for motor vehicles with a chassis, **characterised by** the fact that it comprises: four arches, first (1), second (2), third (3) and fourth (4), arranged consecutively;
- the first arch (1) comprises: a first lateral section (1.1), followed by a first upper section (1.2), followed by a second lateral section (1.3); the second arch (2) comprises: a third lateral section (2.1), followed by a second upper section (2.2), followed by a fourth lateral section (2.3); the third arch (3) comprises: a fifth lateral section (3.1), followed by a third upper section (3.2), followed by a sixth lateral section (3.3); the fourth arch (4) comprises: a seventh lateral section (4.1), followed by a fourth upper section (4.2), followed by an eighth lateral section (4.3);
- a first upper longitudinal crossbar (7) connects the first upper section (1.2) and the second upper section (2.2); a second upper longitudinal crossbar (8) connects the second upper section (2.2) and the third upper section (3.2); a third upper longitudinal crossbar (9) connects the third upper section (3.2) and the fourth upper section (4.2);
- a first transversal crossbar (12) connects the first lateral section (1.1) and the third lateral section (2.1); a second transversal crossbar (13) connects the first lateral section (1.1) and the third lateral section (2.1); a third transversal crossbar (14) connects the second lateral section (1.3) and the fourth lateral section (2.3); a fourth transversal crossbar (15) connects the second lateral section (1.3) and the fourth lateral section (2.3); - a fifth transversal crossbar (16) connects the fifth lateral section (3.1) and the seventh lateral section (4.1); a sixth transversal crossbar (17) connects the fifth lateral section (3.1) and the seventh lateral section (4.1); a seventh transversal crossbar (18) connects the sixth lateral section (3.3) and the eighth lateral section (4.3); an eighth transversal crossbar (19) connects the sixth lateral section (3.3) and the eighth lateral section (4.3);
- a first intermediate section (20) connects the first lateral section (1.1) and the second lateral section (1.3); a second intermediate section (21) connects the third lateral section (2.1)
and the fourth lateral section (2.3);
- a third intermediate section (22) connects the fifth lateral section (3.1) and the sixth lateral section (3.3); a fourth intermediate section (23) connects the seventh lateral section (4.1) and the eighth lateral section (4.3).

2. Chassis kit for vehicles with an open box like according to claim 1 in which a fourth upper longitudinal crossbar (10) connects the second upper section (2.2) and the third upper section (3.2) and/or a fifth upper longitudinal crossbar (11) connects the third upper section (3.2) and the fourth upper section (4.2).

3. Chassis kit for vehicles with an open box like according to claim 2 in which, when there is a fourth upper longitudinal crossbar (10) and a fifth upper longitudinal crossbar (11), they are both aligned.

4. Chassis kit for vehicles with an open box like according to claim 2 in which the fourth upper longitudinal crossbar (10) and the fifth upper longitudinal crossbar (11) are hollow and accessible from the fourth upper section (4.2).

5. Chassis kit for vehicles with an open box like according to claim 1 in which the second arch (2) also comprises a second lower section (2.4) that connects the third side section (2.1) and the fourth side section (2.3); the fourth arch (4) also comprises a fourth lower section (4.4) which connects the seventh lateral section (4.1) and the eighth lateral section (4.3); a first lower longitudinal crossbar (5) connects the second lower section (2.4) and the fourth lower section (4.4); a second lower longitudinal crossbar (6) connects the second lower section (2.4) and the fourth lower section (4.4).

6. Chassis kit for vehicles with an open box like according to claim 5 in which the first lower longitudinal crossbar (5) and/or the second lower longitudinal crossbar (6) is hollow and accessible from the fourth upper section (4.2).

7. Chassis kit for vehicles with an open box like according to claim 1 in which the height of the arches, first (1), second (2), third (3) and fourth (4), is between 1200 mm and 1600 mm, the width of the same is between 1600 mm and 2200 mm, the distance between the first arch (1) and the second arch (2) is between 200 mm and 600 mm, between the second arch (2) and the third arch (3) is between 450 mm and 800 mm, between the third arch (3) and the fourth arch (4) is between 200 mm and 600 mm.

8. Motor vehicle with chassis, comprising a chassis (100) with a first crossbar (101) running parallel to a second crossbar (102), both running lengthwise along the vehicle and joined by a first transversal beam (103), and **characterised by** the fact that it comprises a roll cage kit like according to claim 1, fixed to the first crossbar (101) and to the second crossbar (102).

9. Vehicle with a chassis and an open body according to claim 8 in which there is a first row of seats (200) facing in the opposite direction to the vehicle's direction of travel and which is fixed or supported to the first crossbar (101) and to the second crossbar (102) and/or to the first intermediate section (20) and to the second intermediate section (21).

10. Vehicle with a chassis and an open body according to claim 9 in which there is a second row of seats (300) facing the vehicle's direction of travel and which is fixed or supported to the first crossbar (101) and to the second crossbar (102) and/or to the third intermediate section (22) and to the fourth intermediate section (23).

11. Vehicle with chassis and open box according to claim 8 in which there is a first panel (110) that extends between the first arch (1) and the second arch (2) and that is fixed to or supported by the first crossbar (101) and the second crossbar (102); a second panel (120) that extends between the second arch (2) and the third arch (3) and that is fixed to or supported by the first crossbar (101) and the second crossbar (102); a third panel (130) that extends between the third arch (3) and the fourth arch (4) and is fixed to or supported by the first crossbar (101) and the second crossbar (102).

12. Vehicle with chassis and open body according to claim 11 in which the chassis kit also comprises a fifth arch (24) comprising a ninth lateral section (24.1), followed by a fifth upper section (24.2) and a tenth lateral section (24.3).

13. Vehicle with chassis and open body according to claim 12, which also comprises a fourth panel (140) that extends between the fourth arch (4) and the fifth arch (24) and is fixed to or supported by the first crossbar (101) and the second crossbar (102).

14. Vehicle with chassis and open body according to claim 12 in which a vertically hinged door (170) is fixed in a rotating manner to the ninth side section (24.1) and to the tenth side section (24.3), or to a fifth lower section (24.4) when this is connected to the ninth side section (24.1) and the tenth side section (24.3).

15. Vehicle with chassis and open body according to claim 12 in which the chassis kit also comprises a sixth arch (25) comprising an eleventh lateral section (25.1), followed by a sixth upper section (25.2) and a twelfth lateral section (25.3).
